# EUROPÄISCHE PATENTSCHRIFT

(11) **EP 3 390 899 B1**
(45) Veröffentlichungstag und Bekanntmachung des Hinweises auf die Patenterteilung: **31.03.2021**
(21) Anmeldenummer: 16819419.9
(22) Anmeldetag: 09.12.2016
(51) Int. Cl.: F21S 41/24, F21S 41/29, F21S 41/663, F21S 41/143, F21S 41/153, F21S 41/255, F21Y 103/10, F21Y 105/12

(54) **ZUSATZSCHEINWERFER FÜR FAHRZEUGE**
ADDITIONAL HEADLAMP FOR VEHICLES
PROJECTEUR ADDITIONNEL POUR VÉHICULES

(30) Priorität: 17.12.2015 AT 510742015
(43) Veröffentlichungstag der Anmeldung: 24.10.2018
(73) Patentinhaber: ZKW Group GmbH, 3250 Wieselburg (AT)
(72) Erfinder: DANNER, Markus, 2252 Ollersdorf (AT); TAUDT, Lukas, 3250 Wieselburg (AT)
(74) Vertreter: Patentanwaltskanzlei Matschnig & Forsthuber OG
(86) Internationale Anmeldenummer: PCT/AT2016/060121
(87) Internationale Veröffentlichungsnummer: WO 2017/100812

(56) Entgegenhaltungen:
- EP-A1- 2 532 950
- DE-A1-102008 048 764
- DE-A1-102011 077 636
- DE-A1-102012 002 458
- FR-A1- 2 889 869

## Beschreibung

Die Erfindung betrifft einen Zusatzscheinwerfer für ein Fahrzeug, der dazu eingerichtet ist, ein Lichtbild vor dem Fahrzeug durch Emittieren von Licht aus zumindest einem Lichtmodul zu erzeugen und durch eine nachgelagerte Abbildungsoptik vor das Fahrzeug zu projizieren.

Bei der Entwicklung der gegenwärtigen Scheinwerfersysteme steht immer mehr der Wunsch im Vordergrund, ein Lichtbild auf die Fahrbahn projizieren zu können, das rasch geändert und den jeweiligen Verkehrs-, Straßen- und Lichtbedingungen angepasst werden kann. Dazu werden verschiedene Scheinwerfer, beispielsweise Haupt- und Zusatzscheinwerfer, eingesetzt, die unterschiedliche Lichtbilder auf der Fahrbahn erzeugen. Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder auch darüber hinaus erstreckt. Prinzipiell entspricht das Lichtbild im verwendeten Sinn einer Projektion auf eine vertikale Fläche entsprechend der einschlägigen Normen, die sich auf die KFZ-Beleuchtungstechnik beziehen.

Um diesem genannten Bedürfnis zu entsprechen, wurden unter anderem Scheinwerfer entwickelt, die aus einer Mehrzahl von Einzelstrahlern eine Leuchtmatrix bilden. Derartige Leuchteinrichtungen sind im Fahrzeugbau gebräuchlich und dienen beispielsweise der Abbildung von blendfreiem Fernlicht, indem das Licht in der Regel von einer Mehrzahl von Lichtquellen ausgestrahlt wird und von einer entsprechenden Mehrzahl von nebeneinander angeordneten Lichtführungen (Vorsatzoptik/ Primäroptik) in Abstrahlrichtung gebündelt wird. Die Lichtführungen weisen einen relativ geringen, trichterförmigen Querschnitt auf und senden das Licht der ihnen zugeordneten einzelnen Lichtquellen daher sehr konzentriert in die Abstrahlrichtung aus. Die Lichtführungen leiten das Licht von den Lichtquellen zu einer möglichst gut angenäherten Position auf einer räumlich gekrümmten Ebene, der Petzval-Fläche der vorgelagerten Abbildungsoptik, weiter. Jedoch weist diese Art von Matrix-Scheinwerfern insbesondere bei Verwendung von einer größeren Anzahl von Hochleistungs-Lichtquellen Einschränkungen in Bezug auf Ableitung deren thermischer Verlustleistung auf. Folglich sind Scheinwerfer, die dynamische Lichtbilder mit besonders hoher Intensität erzeugen, nur sehr aufwendig herzustellen.

Unterschiedliche Verkehrssituationen stellen jeweils voneinander verschiedene spezifische Anforderungen an die Scheinwerfer eines Fahrzeugs. Es kann neben der Ausleuchtung der Fahrbahn durch ein Abblendlicht oder Fernlicht auch gewünscht sein, den Fahrer auf spezielle Gefahrensituationen durch geeignete optische Signalisierung aufmerksam zu machen. Eine solche Gefahrensituation stellt beispielsweise eine Fahrbahnverengung durch eine Baustelle dar. Viele Fahrer können den Abstand zwischen Fahrzeug und Fahrbahnbegrenzung nur schwer einschätzen, da der Fahrer keine direkte Sicht aus der Fahrerperspektive auf die Fahrbahnbegrenzung wie auch auf die Außenbegrenzung des Fahrzeugs hat. Zu diesem Zweck wurde bereits die Funktion eines "Optical Lane Assist" vorgeschlagen.

Die DE 10 2009 009 472 A1 beschreibt ein solches System, das Linien auf die Fahrbahn vor dem Fahrzeug projiziert, um bei einer detektierten Kollisionswahrscheinlichkeit dem Fahrer eine sichere Ausweichrichtung zu signalisieren Die FR 2 889 869 A1 und DE 10 2011 077636 A1 beschreiben weitere Scheinwerfer des Stands der Technik.

Eine Aufgabe der vorliegenden Erfindung liegt darin, eine einfache, kompakte und kostengünstige Ausführungsform für einen Linienscheinwerfer zu finden.

Diese Aufgabe wird mit einem Zusatzscheinwerfer der eingangs genannten Art derart gelöst, dass erfindungsgemäß die Funktion eines Zusatzfernlichts mit der Funktion eines Linienlichts kombiniert wird, um durch die Realisierung in einem gemeinsamen Bauteil eine sehr kompakte Bauform zu erreichen und dadurch Kostenvorteile zu gewinnen. Somit wird ein Zusatzscheinwerfer der eingangs genannten Art derart verbessert, dass
ein erstes Lichtmodul dazu eingerichtet ist, ein erstes Lichtbild mit zumindest einer ersten Lichtverteilung mit zumindest einem ersten, im Wesentlichen vertikal orientierten, linienförmigen Intensitätsmaximum zu erzeugen, und
ein zweites Lichtmodul dazu eingerichtet ist, ein zweites Lichtbild mit einer zweiten Lichtverteilung mit zumindest einem zweiten, im Wesentlichen rechteckförmigen Intensitätsmaximum zu erzeugen,
und sich die Lichtbilder beider Lichtmodule überlagern, wobei das erste Intensitätsmaximum vertikal unter dem zweiten Intensitätsmaximum gelegen ist.

Speziell bei der Integration von mehreren Leuchtvorrichtungen mit ähnlichen Leuchteigenschaften in ein gemeinsames Bauteil vergrößert sich der erzielte Vorteil deutlich. Erfindungsgemäß wird ein Zusatzfernlicht mit einem Linienlicht in einem Bauteil kombiniert, wobei beide Leuchtvorrichtungen jeweils hohe Lichtleistung mit starker optischer Bündelung, d.h. mit kleiner Apertur aufweisen. Vorteilhaft sind daher unter anderem die einfache, kombinierte Ausführung der Projektionslinse, sowie die gemeinsame Kühlung bzw. elektrische Ansteuerung beider Leistungslichtquellen. Der Zusammenbau des Scheinwerfers vereinfacht sich unter anderem durch eine gemeinsame Primäroptik und Blende, die reduzierte Zahl von Montagevorrichtungen äußert sich in geringeren Materialkosten, kleinerer Baugröße und verkürzter Montagezeit.

Die gesamte Projektionsanordnung besteht aus Lichtquelle, Primäroptik und einer Abbildungsoptik (Projektionslinse). Die Abbildungsoptik kann je nach Ausführung zu Verzeichnungen führen. Die Verzeichnung ist ein geometrischer Abbildungsfehler optischer Systeme, der zu einer lokalen Veränderung des Abbildungsmaßstabes führt. Die Maßstabsänderung beruht auf einer Änderung der Vergrößerung mit zunehmendem Abstand des Bildpunktes von der optischen Achse. Die Verzeichnung ist daher rotationssymmetrisch um einen Punkt, der auch Verzeichnungszentrum genannt wird. Die Ursache der Verzeichnung liegt an Blenden, die das Strahlenbündel der Abbildung vor oder hinter der Hauptebene eines optischen Systems mit Öffnungsfehler einengen. Nimmt die Vergrößerung zu den Rändern des Bildfelds zu, dann wird ein Quadrat kissenförmig verzeichnet. Im umgekehrten Fall spricht man von tonnenförmiger Verzeichnung. Es können auch Verzeichnungen höherer Ordnung auftreten, und die Überlagerung verschiedener Ordnungen kann zu einer wellenförmigen Abbildung gerader Linien führen ("wellenförmige Verzeichnung"). Das Maß der Verzeichnung ist bekannt nach DIN ISO 9039: Optik und Photonik - Qualitätsbewertung optischer Systeme - Bestimmung der Verzeichnung (ISO 9039:2008).

Es ist auch klar, dass es bei der Projektion eines Lichtbildes auf die Fahrbahn vor das Fahrzeug zu Projektionsverzerrungen kommen kann, beispielsweise kann ein Lichtbild trapezförmig verzerrt auf der Fahrbahn erscheinen, da die Projektionsebene nicht normal zur Abstrahlrichtung des Lichts orientiert ist. Diese Projektionsverzerrungen entstehen zusätzlich zu den vorher genannten Verzeichnungen.

Sowohl Projektionsverzerrungen als auch Verzeichnungen können durch eine entsprechende Vorverzerrung reduziert bzw. kompensiert werden.

Günstig ist es daher, wenn bei der Erzeugung der Lichtverteilungen im Scheinwerfer eine Vorverzerrung durchgeführt ist, beispielsweise durch eine Blende, und als Ergebnis ein insgesamt entzerrtes Lichtbild projiziert oder zumindest eine Reduktion des störenden Effekts erzielt ist.

Mit dem ersten, im Wesentlichen vertikal orientierten, linienförmigen Intensitätsmaximum ist folglich die entzerrte Lichtprojektion gemeint, in der Projektionsverzerrungen und/ oder Verzeichnungen reduziert sind, gegebenenfalls auch um einer perspektivischen Darstellung der projizierten Linie mit einem Fluchtpunkt in Fahrrichtung oder im Straßenverlauf zur realistischen Darstellung mit Zentralprojektion Rechnung zu tragen. Eine gewisse Linienbreite in der Projektion ist vorgesehen, sodass die projizierte Linie des Fahrzeug-Assistenzsystems aus der Fahrerperspektive gut erkennbar ist.

Es ist vorteilhaft, wenn die langen Seiten des im Wesentlichen rechteckförmigen Intensitätsmaximums horizontal orientiert sind, um eine günstige Lichtverteilung für ein Zusatzfernlicht zu erhalten.

Bei einer bevorzugten Ausführungsform liegt das erste Intensitätsmaximums horizontal innerhalb der horizontalen Breite des zweiten Intensitätsmaximums. Durch den geringen Abstand beider Intensitätsmaxima ist die Apertur der gesamten Optik klein und eine besonders kleine, kompakte und kostengünstige Bauform wird erreicht.

Eine weitere bevorzugte Ausführung des Zusatzscheinwerfers sieht vor, dass das erste Intensitätsmaximum und das zweite Intensitätsmaximum mit einem vertikalen Abstand zueinander angeordnet sind. Beide Lichtverteilungen des Zusatzscheinwerfers haben zwar ähnliche Leuchteigenschaften, dienen vorzugsweise aber unterschiedlichen Anwendungen im Nah- bzw. Fernbereich vor dem Fahrzeug. Das Linienlicht des ersten Lichtmoduls projiziert bevorzugt im Bereich von 2 bis 20 Meter vor dem Fahrzeug eine Linie auf die Fahrbahn, das Zusatzfernlicht des zweiten Lichtmoduls projiziert im Fernlichtbereich, d.h. vorzugsweise im Abstand von mehr als 50 Meter ein Rechteck zur Unterstützung eines weiteren Fernlichts. Aus diesem Grund ist es vorteilhaft, wenn beide Lichtverteilungen keine Überlappung in ihren Intensitätsmaxima aufweisen.

Erfindungsgemäß kann das erste und zweite Lichtbild gleichzeitig oder alternativ projiziert sein und die elektrischen bzw. thermischen Systemanteile demgemäß ausgelegt werden. Wird beispielsweise festgelegt, dass entweder nur Linienlicht oder nur Zusatzfernlicht aktiv sind, vorzugsweise abhängig von der Geschwindigkeit des Fahrzeugs, so kann die gemeinsame Kühlvorrichtung kleiner und kostengünstiger ausgelegt werden. Es kann sowohl eine aktive als auch eine passive Kühlvorrichtung eingesetzt werden.

Erfindungsgemäß umfasst der Zusatzscheinwerfer:
zumindest ein erstes Lichtmodul zur Erzeugung einer ersten Lichtemission durch zumindest eine erste Lichtquelle,
zumindest ein zweites Lichtmodul zur Erzeugung einer zweiten Lichtemission durch zumindest eine zweite Lichtquelle,
zumindest eine Primäroptik, wobei die Primäroptik eine Mehrzahl von Lichtführungselementen aufweist und jedes Lichtführungselement eine Lichteintrittsfläche zum Einkoppeln einer Lichtemission, sowie eine Lichtaustrittsfläche aufweist,
wobei die erste Lichtemission in zumindest ein erstes Lichtführungselement der Primäroptik einkoppelt, die zweite Lichtemission in zumindest ein zweites Lichtführungselement der Primäroptik einkoppelt,
zumindest eine der Primäroptik nachgelagerte Blende mit zumindest einer ersten Blendenöffnung, die der Lichtaustrittsfläche des ersten Lichtführungselements zugewandt ist und zumindest einer zweiten Blendenöffnung, die der Lichtaustrittsfläche des zweiten Lichtführungselements zugewandt ist, wobei die Primäroptik und die Blende ein Gesamtleuchtbild aus den Lichtemissionen erzeugen und
eine der Blende nachgelagerte Abbildungsoptik das Gesamtleuchtbild als Lichtbild in Abstrahlrichtung des Zusatzscheinwerfers als Gesamtlichtbild projiziert.

Durch genannte Anordnung wird ein besonders kostengünstiger Zusatzscheinwerfer geschaffen, der die gewünschten Lichtverteilungen in Einbaulage des Fahrzeugs erzeugt und der bei dessen Zusammenbau durch eine gemeinsame Primäroptik und Blende die Anzahl von Montagevorrichtungen verringert, und Herstellung in Form von geringeren Materialkosten, kleinerer Baugröße und verkürzter Montagezeit deutlich verbessert.

Besonders günstig ist es, wenn dabei alle Lichtaustrittsflächen aller Lichtführungselemente in einer Fläche liegen, da die Konstruktion dadurch vereinfacht wird.

Zusätzlich wird die Konstruktion vereinfacht, wenn die Lichtaustrittsflächen aller Lichtführungselemente, die demselben Lichtmodul zugeordnet sind, eine gemeinsame Lichtaustrittsfläche ausbilden.

Eine effiziente Ausführung beider Lichtmodule sieht vor, dass das alle Lichtführungselemente des ersten Lichtmoduls, von jenen des zweiten Lichtmoduls, baulich getrennt sind, um beide Lichtmodule funktional zu entkoppeln und unerwünschte Lichteinkopplung vom jeweils anderen Lichtmodul zu reduzieren.

Zu weiteren Vereinfachung der Konstruktion und zur Reduktion der Herstellkosten ist für alle Lichtführungselemente eine gemeinsame Halterung vorgesehen.

In einer besonders günstigen Variante wird die Lichtleistung des ersten Lichtmoduls derart verbessert, dass das erste Lichtmodul eine Mehrzahl von Lichtquellen umfasst, die im Wesentlichen vertikal in einer Reihe übereinander angeordnet sind.

In einer weiteren, besonders günstigen Variante wird die Lichtleistung des zweiten Lichtmoduls derart verbessert, dass das zweite Lichtmodul eine Mehrzahl von Lichtquellen umfasst, die im Wesentlichen horizontal in einer Reihe nebeneinander angeordnet sind.

Da die Abbildungsoptik die Orientierung des Lichtbildes bei der Projektion invertiert, ist es vorteilhaft, diesen Umstand in der Anordnung der Lichtmodule zu berücksichtigen, indem das erste Lichtmodul über dem zweiten Lichtmodul angeordnet ist.

Eine kostengünstige Kühlung lässt sich konstruktiv besonders gut umsetzen, wenn das erste Lichtmodul und das zweite Lichtmodul benachbart liegen und eine gemeinsame Kühleinrichtung nutzen.

Eine kostengünstige Steuereinrichtung lässt sich konstruktiv besonders gut umsetzen, wenn das erste Lichtmodul und das zweite Lichtmodul von einer gemeinsamen Steuereinrichtung angesteuert werden.

Günstig ist es, wenn Unebenheiten der Fahrbahn, Beladungszustände des Fahrzeugs oder kurvige Straßenverläufe, dadurch berücksichtigt werden, dass der Zusatzscheinwerfer mechanisch um zumindest eine Achse schwenkbar ist, die Lichtbilder damit situationsabhängig projiziert und den genannten Einfluss reduziert.

Vorteilhaft in Bezug auf Leuchteffizienz, Kosten und Baugröße ist die Verwendung von Leuchtdioden (LEDs) bzw. Power-LEDs (Hochstromleuchtdioden) als Lichtquellen.

Besonders günstig ist es, wenn mehrere Fahrzeugscheinwerfer ein Scheinwerfersystem bilden und ein adaptives Gesamtlichtbild ausbilden, indem das Lichtbild des erfindungsgemäßen Zusatzscheinwerfers zumindest einem weiteren Lichtbild eines Hauptscheinwerfers überlagert ist, insbesondere wenn ein Fahrzeug einen linken und einen rechten erfindungsgemäßen Zusatzscheinwerfer und einen linken und einen rechten Hauptscheinwerfer umfasst. Demnach ergeben sich besonders günstige, sehr variable Gesamtlichtbilder, die bevorzugt von der Situation des Fahrzeugs abhängen, wenn der linke und rechte erfindungsgemäße Zusatzscheinwerfer jeweils unterschiedliche Lichtbilder projizieren.

Ein Scheinwerfersystem, das mit dem Zusatzscheinwerfer auf die vorhandene Lichtverteilung des Hauptscheinwerfers mit einer Lichtverteilung eines Fernlicht oder eines Abblendlichts aufbaut, ist besonders effektiv und kostengünstig.

Die Erfindung und deren Vorteile werden in Folgenden anhand von nicht einschränkenden Beispielen näher beschrieben, die in den beiliegenden Zeichnungen veranschaulicht sind. Die Zeichnungen zeigen in:
- Fig. 1: ein Fahrzeug in der Vorderansicht mit Hauptscheinwerfern und erfindungsgemäßen Zusatzscheinwerfern,
- Fig. 2a: eine perspektivische Ansicht des erfindungsgemäßen Zusatzscheinwerfers, ohne Blende,
- Fig. 2b: eine perspektivische Ansicht eines erfindungsgemäßen Lichtmoduls im Detail A,
- Fig. 3a: eine Vorderansicht des Zusatzscheinwerfers, ohne Blende,
- Fig. 3b: eine Vorderansicht des Zusatzscheinwerfers im Detail B,
- Fig. 4a: eine Vorderansicht des Lichtmoduls mit Halterung, ohne Blende,
- Fig. 4b: eine perspektivische Detailansicht des Lichtmoduls mit Halterung, ohne Blende im Schnitt A-A,
- Fig. 5: eine Vorderansicht des Lichtmoduls mit einer Blende,
- Fig. 6: eine perspektivische Ansicht des Lichtmoduls mit der Blende,
- Fig. 7: eine perspektivische Ansicht des Zusatzscheinwerfers mit einer Abbildungsoptik,
- Fig. 8: eine perspektivische rückseitige Ansicht des Zusatzscheinwerfers mit der Abbildungsoptik und Kühlrippen,
- Fig. 9: eine Explosionsansicht des Zusatzscheinwerfers mit der Abbildungsoptik,
- Fig. 10: ein Lichtbild mit einer linienförmigen Lichtverteilung eines linken Zusatzscheinwerfers,
- Fig. 11: ein Lichtbild mit einer linienförmigen Lichtverteilung eines rechten Zusatzscheinwerfers,
- Fig. 12: ein Lichtbild mit der (rechteckförmigen) Lichtverteilung eines Zusatzfernlichts des linken Zusatzscheinwerfers,
- Fig. 13: ein Lichtbild mit der (rechteckförmigen) Lichtverteilung eines Zusatzfernlichts des rechten Fernlicht-Zusatzscheinwerfers,
- Fig. 14: ein Lichtbild der Lichtverteilung eines Abblendlichts des linken Hauptscheinwerfers,
- Fig. 15: ein überlagertes Lichtbild von Abblendlicht aus Fig. 14 und der Linie aus Fig. 10 des linken Haupt- und Zusatzscheinwerfers,
- Fig. 16: ein überlagertes Lichtbild von Abblendlicht und der Linie aus Fig. 11 des rechten Haupt- und Zusatzscheinwerfers,
- Fig. 17: ein überlagertes Gesamtlichtbild von linkem linken Haupt- und Zusatzscheinwerfer aus Fig. 15 und rechtem Haupt- und Zusatzscheinwerfer aus Fig. 16,
- Fig. 18: ein vor dem Fahrzeug auf die Fahrbahn projiziertes überlagertes Gesamtlichtbild von linkem linken Haupt- und Zusatzscheinwerfer aus Fig. 15 und rechtem Haupt- und Zusatzscheinwerfer aus Fig. 16,
- Fig. 19: ein Lichtbild der Lichtverteilung eines Fernlichts des linken Hauptscheinwerfers,
- Fig. 20: ein Lichtbild der Lichtverteilung eines Fernlichts des rechten Hauptscheinwerfers,
- Fig. 21: ein überlagertes Lichtbild von Fernlicht aus Fig. 19 und Zusatzfernlicht aus Fig. 12 des linken Haupt- und Zusatzscheinwerfers,
- Fig. 22: ein überlagertes Lichtbild von Fernlicht aus Fig. 20 und Zusatzfernlicht aus Fig. 13 des rechten Haupt- und Zusatzscheinwerfers,
- Fig. 23: ein vor dem Fahrzeug auf die Fahrbahn projiziertes Lichtbild des rechten Haupt- und Zusatzscheinwerfers aus Fig. 22,
- Fig. 24: ein überlagertes Lichtbild von Fernlicht aus Fig. 10 und Zusatzfernlicht aus Fig. 12 und Linienlicht aus Fig. 10 des linken Haupt- und Zusatzscheinwerfers,
- Fig. 25: ein überlagertes Lichtbild von Fernlicht aus Fig. 20 und Zusatzfernlicht aus Fig. 13 und Linienlicht aus Fig. 11 des rechten Haupt- und Zusatzscheinwerfers,
- Fig. 26: ein überlagertes Gesamtlichtbild des linken Haupt- und Zusatzscheinwerfers aus Fig. 24 und rechten Haupt- und Zusatzscheinwerfers aus Fig. 25.

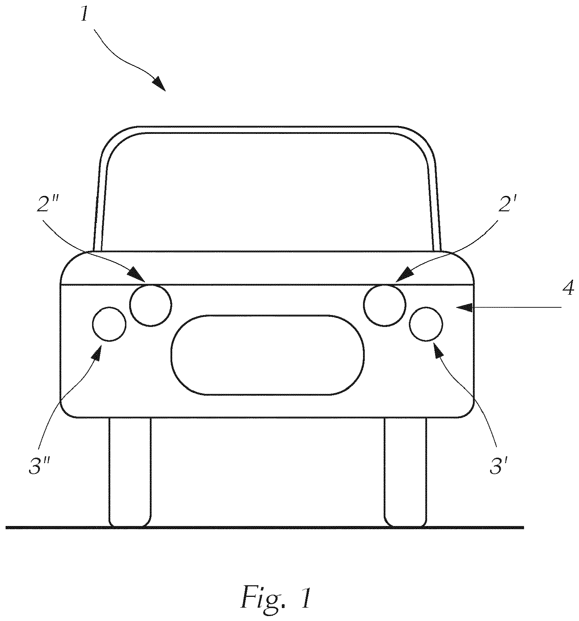

Unter Bezugnahme auf Fig. 1 bis 27 wird nun ein Ausführungsbeispiel der Erfindung näher erläutert. Insbesondere sind die für einen erfindungsgemäßen Scheinwerfer wichtigen Teile dargestellt, wobei klar ist, dass ein Scheinwerfer noch viele andere Teile enthält, die einen sinnvollen Einsatz in einem Kraftfahrzeug, wie insbesondere einem PKW oder Motorrad, ermöglichen.

Die Figuren **1** bis **9** zeigen ein Ausführungsbeispiel eines erfindungsgemäßen Zusatzscheinwerfers.

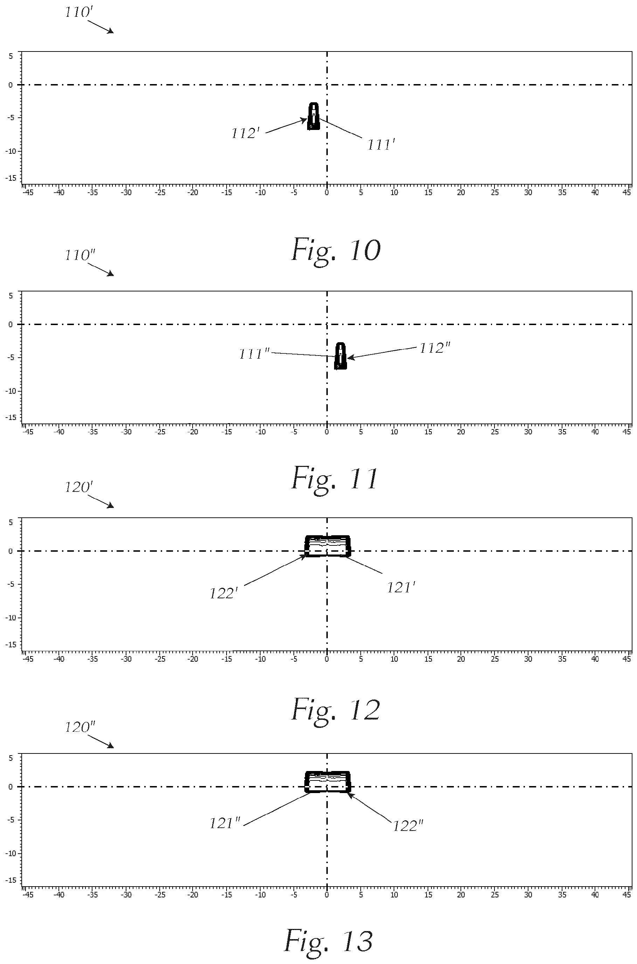

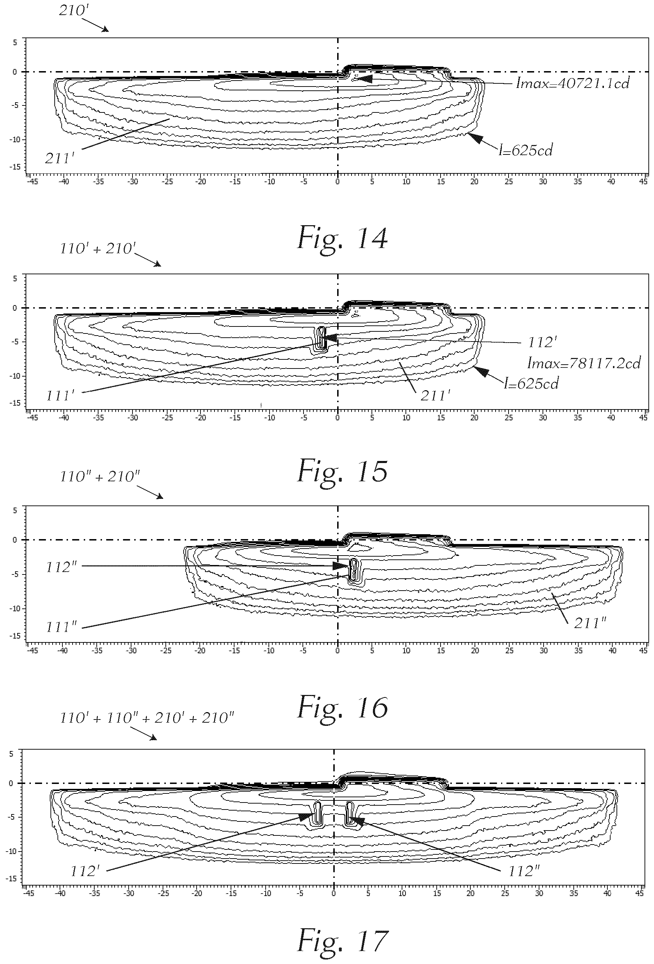

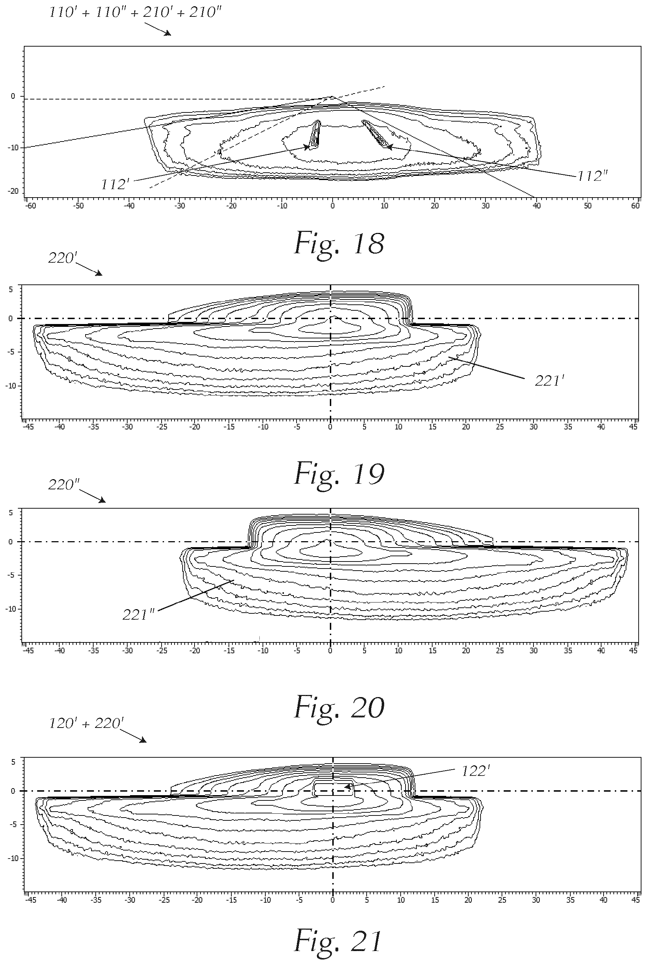

Die Figuren **10** bis **27** zeigen verschiedene Lichtverteilungen, wobei in Fig. 14 und Fig. 15 Intensitäten der Isoluxkurven exemplarisch gezeigt sind, deren Intensitätsbeträge für alle Figuren 10 bis 27 gelten. Dabei ist beispielsweise ein Intensitätsmaximum einer Linienprojektion gemäß Fig. 18 mit ca. 78k Candela etwa doppelt so groß, wie das Intensitätsmaximum einer Vorfeldbeleuchtung eines Abblendlichts mit ca. 40 k Candela gemäß Fig. 14. Damit der Fahrer einen Kontrast einer projizierten Linie gegenüber einer Vorfeldbeleuchtung, das heißt einer eingeschalteten Abblendlicht-Lichtfunktion des Fahrzeugs, erkennen kann, ist ein derartiger Intensitätsunterschied notwendig. Die beispielhaft verwendeten Lichtstärken können in Beleuchtungsstärken umgerechnet werden, wie dem Fachmann geläufig.

In **Fig. 1** ist im Überblick ein Fahrzeug 1 dargestellt, das linke und rechte Hauptscheinwerfer 2' und 2" und erfindungsgemäße Zusatzscheinwerfer 3' und 3"aufweist. Die beiden Hauptscheinwerfer 2', 2" erzeugen vorzugsweise eine Lichtverteilung von Abblendlicht oder Fernlicht. Die beiden erfindungsgemäßen Zusatzscheinwerfer 3', 3" erzeugen eine linienförmige Lichtverteilung sowie eine Lichtverteilung eines Zusatzfernlichts in zwei Modulen, wobei alle Lichtverteilungen einzeln oder in Kombination der Scheinwerfer aktivierbar sind, wie auch die Kombination von linken und rechten Scheinwerfern möglich ist, um der jeweiligen Fahrsituation Rechnung zu tragen. Die Position der einzelnen Scheinwerfer 2', 2", 3' und 3" am Fahrzeug 1 kann variieren und hängt unter anderem vom Design des Fahrzeugs ab. Eine fahrbahnnahe Position der erfindungsgemäßen Zusatzscheinwerfer 2', 2" am Fahrzeug 1 kann vorteilhaft sein.

Ferner ist ein Scheinwerfersystem 4 erkennbar, das einen Hauptscheinwerfer 2', 2" und einen Zusatzscheinwerfer 3', 3" umfasst. Dabei kann ein Lichtbild 110', 110" des Zusatzscheinwerfer 3', 3" von einem weiteren Lichtbild 210', 210", 220', 220" des Hauptscheinwerfers 2', 2" überlagert werden. Das Scheinwerfersystem 4 eines Fahrzeugs 1 umfasst dabei einen linken und einen rechten Zusatzscheinwerfer 3', 3" und einen linken und einen rechten Hauptscheinwerfer 2', 2". Je nach Betriebsmodus kann der linke und rechte Zusatzscheinwerfer 3', 3" jeweils unterschiedliche Lichtbilder projizieren. Dabei kann das Lichtbild des Hauptscheinwerfers 2', 2" ein Lichtbild eines Abblendlichts 210', 210" oder eines Fernlichts 220', 220" sein.

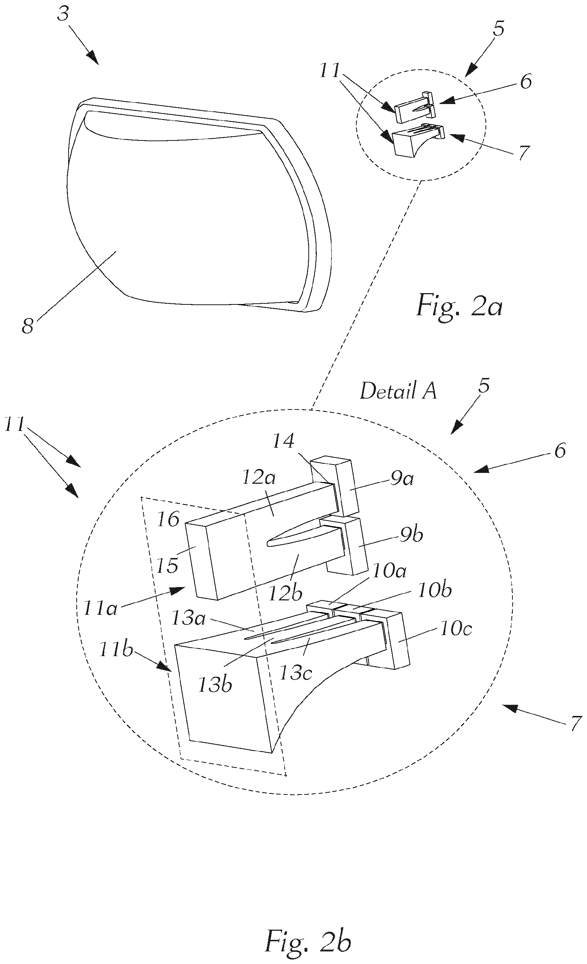

In **Fig. 2a** ist die Anordnung des Zusatzscheinwerfers 3', 3" als Zusatzscheinwerfer 3 im Überblick dargestellt. Der Zusatzscheinwerfer 3 besteht aus einem Lichtmodul 5, das das Licht emittiert, formt und durch eine nachgelagerte Abbildungsoptik 8 vor das Fahrzeug als Lichtbild 110', 110" projiziert. Detail A in **Fig. 2b** zeigt das Lichtmodul 5, das ein erstes Lichtmodul 6 zur Erzeugung erster Lichtemissionen durch erste Lichtquellen 9a und 9b, sowie ein zweites Lichtmodul 7 zur Erzeugung zweiter Lichtemissionen durch zweite Lichtquellen 10a, 10b, 10c umfasst und eine Primäroptik 11. Die Primäroptik 11 des Zusatzscheinwerfers 3 umfasst zwei Teile, eine erste Primäroptik 11a des ersten Lichtmoduls und eine zweite Primäroptik 11b des zweiten Lichtmoduls und weist eine Mehrzahl von Lichtführungselementen 12a, 12b, 13a, 13b, 13c auf, wobei jedes Lichtführungselement 12a, 12b, 13a, 13b, 13c eine Lichteintrittsfläche 14 zum Einkoppeln einer Lichtemission, sowie eine Lichtaustrittsfläche 15 aufweist. Die Lichtführungselemente 12a, 12b, 13a, 13b, 13c der Primäroptik bilden in diesem Ausführungsbeispiel zwei Gruppen für zwei unterschiedliche Lichtverteilungen, die mit den dazugehörigen Lichtquellen durch die Lichtmodule 6 und 7 repräsentiert sind. Die bauliche Trennung beider Lichtmodule dient zur Entkopplung der optischen Ausbreitungswege. Die erste Lichtemission koppelt in ein erstes Lichtführungselement 12a, 12b der Primäroptik 11 ein und die zweite Lichtemission koppelt in ein zweites Lichtführungselement 13a, 13b, 13c der Primäroptik 11 ein. Die Lichtquellen 9a, 9b, 10a, 10b, 10c können lose oder fest an die jeweiligen Lichteintrittsflächen angekoppelt sein. Die Art der genannten Ankopplung wird unter anderem durch die Ausführung der Lichtquellen 9a, 9b, 10a, 10b, 10c bestimmt, wobei ein Abstand zwischen Lichteintrittsflächen und Lichtquellen konstruktiv vorgesehen sein kann, um mechanischen Belastungen, wie beispielsweise Vibrationen oder unterschiedlichen Temperaturausdehnungen einzelner Komponenten, begegnen zu können.

Lichtführungselemente 12a, 12b, 13a, 13b, 13c formen gemeinsam mit einer Blende 16, die Blendenöffnungen 16a, 16b umfasst, (in dieser Figur nicht dargestellt) die Lichtemissionen und bilden ein Leuchtbild auf der gemeinsamen Fläche F aus, die die Petzval-Fläche der Abbildungsoptik 8 nachformt. Die Blende 16 sorgt durch ihre Blendenöffnungen 16a, 16b üblicherweise für scharfe Konturen im Leuchtbild, die Lichtführungselemente 12a, 12b, 13a, 13b, 13c für eine geeignete flächige Abstrahlcharakteristik. Üblicherweise vergrößert sich der Querschnitt der Lichtführungselemente 12a, 12b, 13a, 13b, 13c von der Lichteintrittsfläche 14 zur Lichtaustrittsfläche 15 hin. Folglich sind die Lichtaustrittsflächen 15 größer als die korrespondierenden Lichteintrittsflächen 14 des jeweiligen Lichtführungselements 12a, 12b, 13a, 13b, 13c.

Bevorzugt liegen die Lichtaustrittsflächen 14 aller Lichtführungselemente 12a, 12b, 13a, 13b, 13c in einer Fläche F. Günstig ist es, wenn die Fläche F eine Ebene ist und dadurch eine besonders einfache Konstruktion der Primäroptik 11 erlaubt. Darüber hinaus ist es vorteilhaft, wenn die Lichtaustrittsflächen aller Lichtführungselemente 12a, 12b, 13a, 13b, 13c, die demselben Lichtmodul 6, 7 zugeordnet sind, eine gemeinsame Lichtaustrittsfläche ausbilden und alle Lichtführungselemente des ersten Lichtmoduls 6, von jenen des zweiten Lichtmoduls 7, baulich getrennt sind, um Überkopplungen zwischen beiden Lichtmodulen 6 und 7 zu reduzieren. Für eine hohe Effizienz des Zusatzscheinwerfers 3 ist dies sehr wichtig, da die erzeugte Lichtemission möglichst verlustfrei in die gewünschte Lichtverteilung transformiert werden soll.

Die Primäroptik 11 kann aus einem elastischen (z.B. Silikon, Photopolymere, etc.) oder festen (z.B. Polycarbonat, thermoplastische Kunststoffe, Photopolymere, Glas, etc.) Material hergestellt sein, wobei die jeweilige Wahl durch kommerzielle Erfordernisse bestimmt werden kann. Besonders einfach wird die Primäroptik durch ein Spritzgussverfahren herstellt.

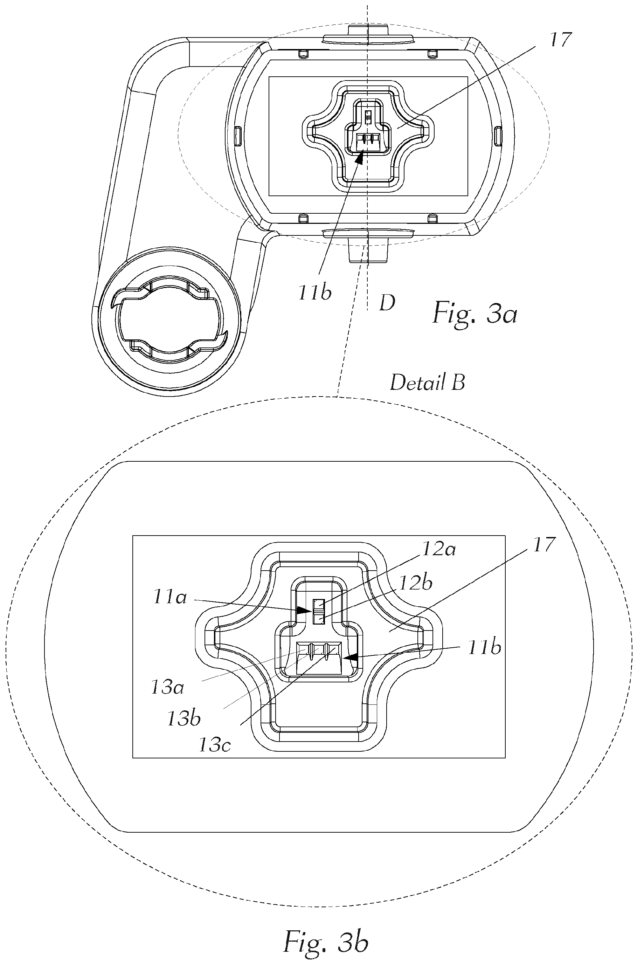

**Fig. 3a** zeigt den Zusatzscheinwerfer 3 mit einer Halterung 17 zur mechanischen Befestigung der Lichtmodule 6 und 7 im Zusatzscheinwerfer 3, ohne montierte Blende und ohne Abbildungsoptik 8. Im Detail B in **Fig. 3b** ist die Lage des ersten Lichtmoduls 6 zur Erzeugung des linienförmigen Intensitätsmaximums 8a durch die zugehörigen Lichtführungselemente 12a, 12b sowie des zweiten Lichtmoduls 7 zur Erzeugung des rechteckig geformten Intensitätsmaximums 122', 122" durch die zugehörigen Lichtführungselemente 13a, 13b, 13c in der Lichtverteilung.
Zusätzlich ist eine Drehachse D eingezeichnet, um die der Zusatzscheinwerfer 3 mechanisch schwenkbar ist, um eine dem Straßenverlauf folgendes Nachführen der erzeugten Lichtverteilungen zu ermöglichen. Eine zweite Drehachse zum Schwenken um eine weitere, beispielsweise horizontale Achse, ist nicht dargestellt. Die Halterung 17 ist hier einteilig ausgeführt, um die Lichtführungselemente der Primäroptik 11 zu fixieren. Folglich ist nur eine gemeinsame Befestigung nötig und Konstruktion, Herstellung, Montage etc. werden vereinfacht.

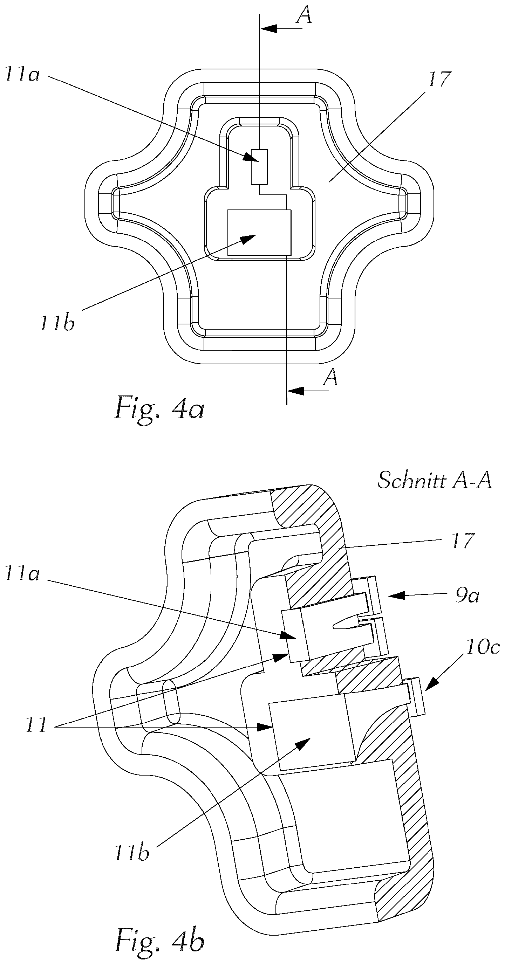

In **Fig. 4a** und **Fig. 4b** sind jeweils die Lichtmodule 6 und 7 bzw. die zweiteilige Primäroptik 11 dargestellt, die mit einer Halterung 17 in Position gehalten wird. Die Halterung kann dabei aus einem elastischen oder festen Material gefertigt sein, wobei strukturelle Verstärkungen nur im Bereich um die Lichtführungselemente 12a, 12b, 13a, 13b, 13c und den Randbereich der Halterung 17 vorteilhaft sind, um das Gewicht der Halterung 17 möglichst gering zu halten. Die Lichtquellen 9a, 9b, 10a, 10b, 10c selbst werden meist von einer Leiterplatte (nicht dargestellt) gehalten.

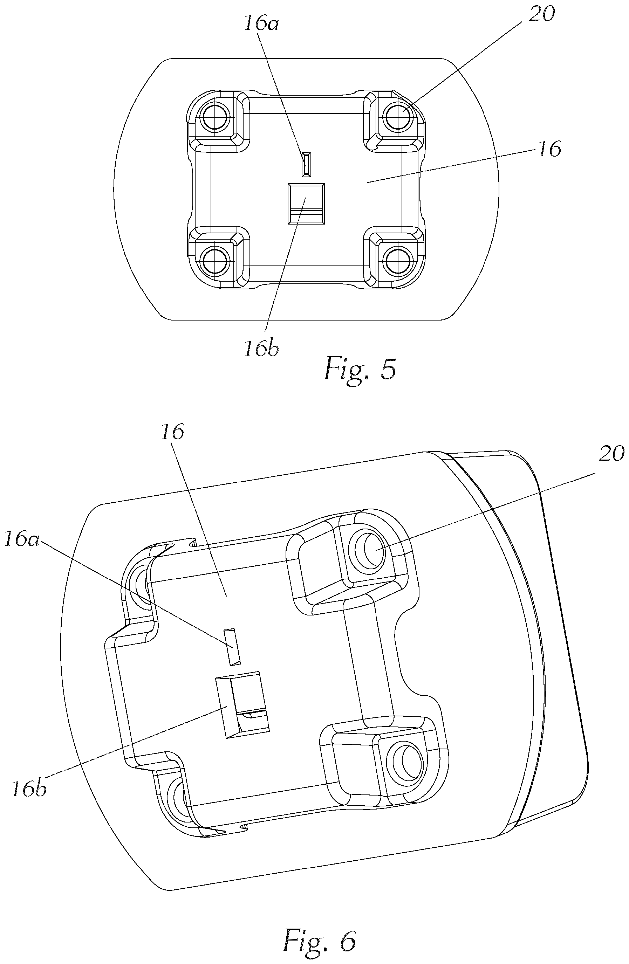

**Fig. 5** zeigt das Lichtmodul 6, 7 in der Vorderansicht mit montierter Blende 13, die zwei Blendenöffnungen 16a, 16b aufweist, um zusätzlich zu den Lichtführungselementen 12a, 12b, 13a, 13b, 13c die Lichtemission zu formen. Durch die Blende 16 werden besonders scharfe Konturen in der Lichtverteilung ausgeprägt, was beispielsweise für die Linienprojektion und deren Sichtbarkeit durch guten Kontrast wesentlich ist. Die gemeinsame Blende 16 erlaubt unter anderem eine kostengünstige und einfache Konstruktion, Herstellung bzw. Montage und unterstützt die kompakte und leichte Bauform des Zusatzscheinwerfers. Die Blende 16 wird durch eine oder mehrere Montagepunkte 20 im Zusatzscheinwerfer 3 befestigt, wobei die Montagepunkte 20 besonders vorteilhaft als Bohrungen ausgeführt sind, durch die Schrauben die Blende mit einem anderen Teil des Zusatzscheinwerfers 3 verbinden. Alternativ zu Schrauben sind Steckverbindungen, Nieten oder ähnliches möglich. Andererseits ist beispielsweise auch eine klebende Verbindungtechnik geeignet, um eine kompakte und leichte Bauform zu erreichen. Im vorliegenden Beispiel ist die Halterung 17 derart ausgeführt, dass sie an den Positionen der Schraubverbindungen Aussparungen aufweist, um eine gemeinsame Befestigung durch die vorgenannten Schrauben von Blende 16 mit einem Gehäuse des Zusatzscheinwerfers 3 mit dazwischen liegender Halterung 17 zu unterstützen, wobei die Schrauben die Blende 16 mit dem Gehäuse des Zusatzscheinwerfers 3 verbinden und eine Kühlvorrichtung 18 Teil des Gehäuses sein kann. Die Montage erweist sich folglich als besonders einfach und schnell, außerdem wird die Anzahl der benötigten Komponenten für den Zusatzscheinwerfer 3 minimal gehalten. Die Verwendung von vier Schrauben ist vorteilhaft, wird dadurch eine besondere Stabilität und Verzugsfreiheit durch mechanische oder thermische Belastungskräfte erreicht. Schrauben als lösbare Verbindung weisen in Hinblick auf Wartung besonders günstige Eigenschaften auf. Ferner ist der Aufbau besonders einfach, wenn in den Verbund aus einer Blende 16, einer Halterung 17 und einem Gehäuse des Zusatzscheinwerfers 3 eine Leiterplatte 21 (nicht dargestellt) eingefügt ist, die zumindest mehrere Lichtquellen 9a, 9b, 10a, 10b, 10c umfasst und durch dieselbe Befestigung fixiert ist, wobei die Leiterplatte 21 bzw. die darauf angeordneten Lichtquellen 9a, 9b, 10a, 10b, 10c thermisch gut mit dem Gehäuse verbunden ist.

**Fig. 6** zeigt das Lichtmodul 6, 7 in der perspektivischen Ansicht mit der montierten Blende 16 und den Blendenöffnungen 16a, 16b.

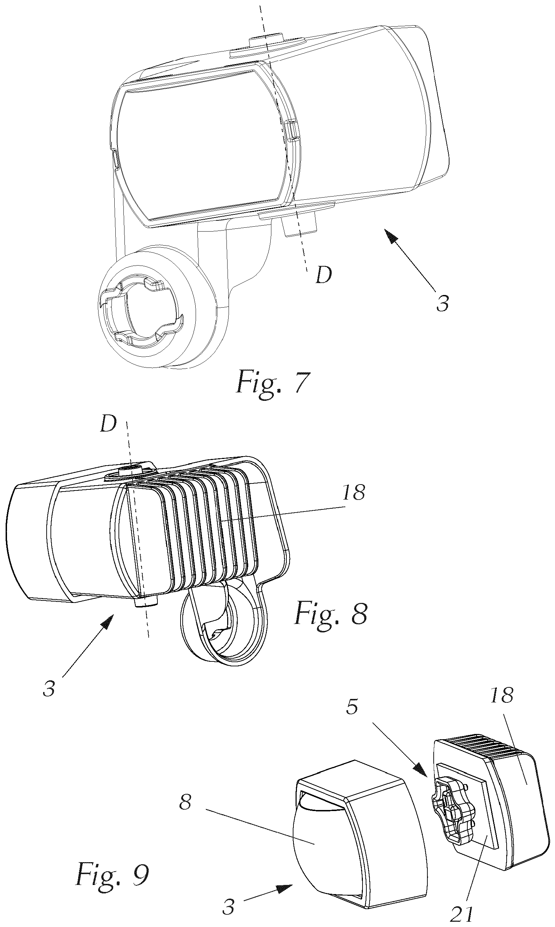

**Fig. 7** zeigt den sehr kompakten Zusatzscheinwerfer 3 in der Vorderansicht, auf den die Abbildungsoptik 8 aufgesetzt ist. Es ist die Drehachse D zu sehen, um die der Zusatzscheinwerfer 3 mechanisch schwenkbar sein kann.

**Fig. 8** zeigt den Zusatzscheinwerfer 3 in der Ansicht von hinten mit der auf der Rückseite befindlichen, gemeinsamen Kühlvorrichtung 18 für das Lichtmodul 6, 7. Bei selektiver Nutzung von Linienlicht und Zusatzfernlicht, vorzugsweise abhängig von der Geschwindigkeit des Fahrzeugs, kann die gemeinsame Kühlvorrichtung 18 klein, leicht und kostengünstig ausgelegt werden. Der Zusatzscheinwerfer 3 ist um die Drehachse D schwenkbar. Nicht gezeigt ist die gemeinsame Steuereinrichtung 19, die die beiden Lichtmodule 6 und 7 elektrisch ansteuert. Die gemeinsame Steuereinrichtung 19 erzielt Kosten- und Gewichtsvorteile.

**Fig. 9** zeigt den Zusatzscheinwerfer 3 in der Explosionsdarstellung mit Abbildungsoptik 8 und Halterung 17 und Leiterplatte 21 mit Lichtquellen 9a, 9b, 10a, 10b, 10c (nicht dargestellt). Die Halterung 17 kann aus einem elastischen oder steifen Material sein. Durch die gemeinsame Halterung 17 für die zweigeteilte Primäroptik 11 wird eine einfache Konstruktion bzw. Montage unterstützt, sowie eine kompakte Bauform des Zusatzscheinwerfers erzielt. Die Leiterplatte 21 kann neben den Lichtquellen 10 meist weitere elektronische Schaltkreise, wie Treiber- und Logikstufen zum Schalten der Lichtquellen 9a, 9b, 10a, 10b, 10c oder die Steuereinrichtung umfassen, sowie Anschlusseinheiten zum Verbinden mit Kabeln zur Steuerung und Stromversorgung. Vorteilhaft ist die gemeinsame Ausführung der Anschlusseinheiten für beide Lichtmodule, um den Kabelbaum im Fahrzeug einfach zu halten. Die Leiterplatte 21 kann derart ausgeführt sein, dass sie eine geeignete thermische Verbindung zwischen Lichtquellen 10 und Kühlvorrichtung 18, beispielsweise durch Öffnungen in der Leiterplatte 21, unterstützt. In vielen Fällen ist die der optischen Abstrahlfläche der Lichtquelle 10 mit besonderen Kühlkontakten ausgestattet, um eine günstige Verbindung zu einem Kühlkörper zu ermöglichen. Die Kühlung durch die Kühlvorrichtung 18 kann aktiv, d.h. durch ein Gebläse zur Luftkühlung oder eine Flüssigkeitskühlung ausgeführt sein, im gegenständlichen Beispiel ist die Kühlvorrichtung 18 ein passiver Kühlkörper.

**Fig. 10** bis **Fig. 27** zeigen Lichtbilder in kartesischer Darstellung mit Winkelskalen auf beiden Achsen nach den UN ECE-Richtlinien für einheitliche Bedingungen für die Genehmigung von Kraftfahrzeugscheinwerfern (z.B. TRANS/WP.29/343), die Isoluxlinien für verschiedene Intensitäten darstellen.

Im Weiteren werden Lichtbilder von Lichtverteilungen gezeigt, wobei die Lichtbilder, die durch die vom Fahrzeug 1 in Fahrtrichtung links gelegenen Scheinwerfer 2', 3' vor das Fahrzeug projiziert werden, mit einem einfachen Apostroph >'< gekennzeichnet sind, und die vom Fahrzeug 1 in Fahrtrichtung rechts gelegenen Scheinwerfer 2", 3" vor das Fahrzeug projiziert werden, mit einem doppelten Apostroph >"< gekennzeichnet sind.

Dementsprechend ist ein linker Hauptscheinwerfer im Weiteren mit dem Bezugszeichen 2' und ein rechter Hauptscheinwerfer mit dem Bezugszeichen 2" bezeichnet, wobei die Hauptscheinwerfer typischerweise eine gleiche Konzeption ausweisen, jedoch symmetrisch um die Fahrzeuglängsachse gespiegelt aufgebaut sind.

Der linke Zusatzscheinwerfer 3', der baulich beispielsweise einem Zusatzscheinwerfer 3 gemäß der Fig. 1 bis 9 entspricht, kann durch ein erstes linkes Lichtmodul 6', das baulich dem ersten Lichtmodul 6 entspricht, beispielsweise ein Lichtbild 110' erzeugen (Fig. 10).

Der rechte Zusatzscheinwerfer 3", der baulich beispielsweise einem Zusatzscheinwerfer 3 gemäß der Fig. 1 bis 9 entspricht, kann durch ein erstes rechtes Lichtmodul 6", das baulich dem ersten Lichtmodul 6 entspricht, beispielsweise ein Lichtbild 110" erzeugen (Fig. 11).

Folglich ergibt sich bei gleichzeitigem Betrieb des ersten Lichtmoduls 6' des linken Zusatzscheinwerfers 3' und des ersten Lichtmoduls 6" des rechten Zusatzscheinwerfers 3" ein gemeinsames Lichtbild, was im Weiteren in verschiedenen Konfigurationen dargestellt ist.

Die Lichtbilder 110' und 110" können jeweils Linien-Lichtverteilungen 111', 111" mit linienförmigen Intensitätsmaxima 112' und 112" aufweisen.

Es ist klar, dass die gezeigten Lichtverteilungen teilweise durch Überlagerung mehrerer Lichtverteilungen gebildet sind. Folglich sind beispielsweise dargestellte Intensitätsmaxima genau genommen eine Überlagerung eines einzelnen Intensitätsmaximums mit einer weiteren Lichtverteilung an dem Ort des Maximums, wodurch der jeweilige Funktionswert an dem Ort nicht mehr exakt dem ursprünglichen Intensitätsmaximum entspricht. Zur besseren Übersichtlichkeit wird dieser Aspekt aber nicht berücksichtigt und in den Figuren nicht gesondert dargestellt. Dieser Aspekt ist grundsätzlich und daher auch bei den Lichtverteilungen in den weiteren Figuren anzuwenden.

Der linke und rechte Hauptscheinwerfer 2', 2" umfasst in diesem Ausführungsbeispiel Lichtfunktionen für ein Abblendlicht 210', 210" und ein Fernlicht 220', 220".

**Fig. 10** zeigt das Lichtbild 110' des linken Zusatzscheinwerfers 3' mit dessen ersten Lichtverteilung 111' und dessen ersten, linienförmigen Intensitätsmaximum 112', d.h. einer Linien-Lichtverteilung.

**Fig. 11** zeigt das Lichtbild 110" des rechten Zusatzscheinwerfers 3" mit dessen ersten Lichtverteilung 111" und dessen ersten, linienförmigen Intensitätsmaximum 112", d.h. einer Linien-Lichtverteilung.

**Fig. 12** zeigt das Lichtbild 120' des linken Zusatzscheinwerfers 3' mit dessen zweiten Lichtverteilung 121' und dessen zweiten, im Wesentlichen rechteckförmigen Intensitätsmaximum 122', d.h. einer Zusatzfernlicht-Lichtverteilung. Das im Wesentlichen rechteckförmige Intensitätsmaximum 122' kann beispielsweise quadratisch, rechteckförmig, trapezförmig oder auch elliptisch sein und spitze oder abgerundete Ecken aufweisen. Spezielle Formen des Intensitätsmaximums 122' sind ebenso denkbar, um eine bestmögliche Lichtverteilung je nach Verkehrssituation zu erhalten. Ebenso ist eine dynamische Form des Intensitätsmaximums 122', das beispielsweise durch die jeweilige Verkehrssituation aktiv angepasst wird, möglich. Diese dynamische Anpassung kann das gezielte Abschalten einzelner Bereiche innerhalb des Intensitätsmaximums 122' bedeuten, um ein blendfreies Fernlicht zu erhalten und den entgegenkommenden Verkehr punktuell auszublenden.

**Fig. 13** zeigt das Lichtbild 120" des rechten Zusatzscheinwerfers 3" mit dessen zweiten Lichtverteilung 121" und dessen zweiten, im Wesentlichen rechteckförmigen Intensitätsmaximum 122", beispielsweise einer Zusatzfernlicht-Lichtverteilung.

In Fig. 14 ist ein Lichtbild 210' einer Lichtverteilung 211' eines Abblendlichts des linken Hauptscheinwerfers 2' mit einer typischen Asymmetrie in der Hell-Dunkel-Grenze dargestellt.

Fig. 15 zeigt das Lichtbild 110' des linken Zusatzscheinwerfers 3' mit der linienförmigen Lichtverteilung 111' nach Fig. 10, dem das Lichtbild 210' die Abblendlicht-Lichtverteilung 211' des linken Hauptscheinwerfers 2' nach Fig. 14 überlagert ist. Das Intensitätsmaximum 112' ist mit ca. 78k Candela etwa doppelt so groß, wie das Intensitätsmaximum mit ca. 40 k Candela einer Vorfeldbeleuchtung beziehungsweise eines Abblendlichts gemäß Fig. 14.

**Fig. 16** zeigt das Lichtbild 110" des rechten Zusatzscheinwerfers 3" mit der linienförmigen Lichtverteilung 111" mit dem Intensitätsmaximum 112" nach Fig. 11, dem das Lichtbild 210" mit der Abblendlicht-Lichtverteilung 211" des rechten Hauptscheinwerfers 2" überlagert ist.

**Fig. 17** zeigt das überlagerte Gesamtlichtbild der Lichtbilder 110', 110" nach Fig. 15 und 16 des linken und rechten Zusatzscheinwerfers 3', 3" mit linienförmigen Intensitätsmaxima 112', 112" in der jeweiligen Lichtverteilung 111', 111", sowie die Lichtbilder 210', 210" der Lichtverteilungen 211', 211" des linken und rechten Hauptscheinwerfers 2', 2" mit jeweils einer Abblendlicht-Lichtverteilung.

**Fig. 18** stellt die Gesamtlichtverteilung nach Fig. 17 als Lichtbild durch Projektion auf die Fahrbahn vor dem Fahrzeug 1 dar. Gegenüber den vorher genannten Lichtbildern enthält die Projektionsansicht perspektivische Abbildungsverzerrungen.

In **Fig. 19** ist ein Lichtbild 220' einer Fernlicht-Lichtverteilung 221' des linken Hauptscheinwerfers 2' dargestellt.

In **Fig. 20** ist ein Lichtbild 220" einer Fernlicht-Lichtverteilung 221" des rechten Hauptscheinwerfers 2" dargestellt.

**Fig. 21** zeigt das Lichtbild 220' mit der Fernlicht-Lichtverteilung 221' des linken Hauptscheinwerfers 2' gemeinsam mit der Zusatzfernlicht-Lichtverteilung 121' und dem Intensitätsmaximum 122' des linken Zusatzscheinwerfers 3'.

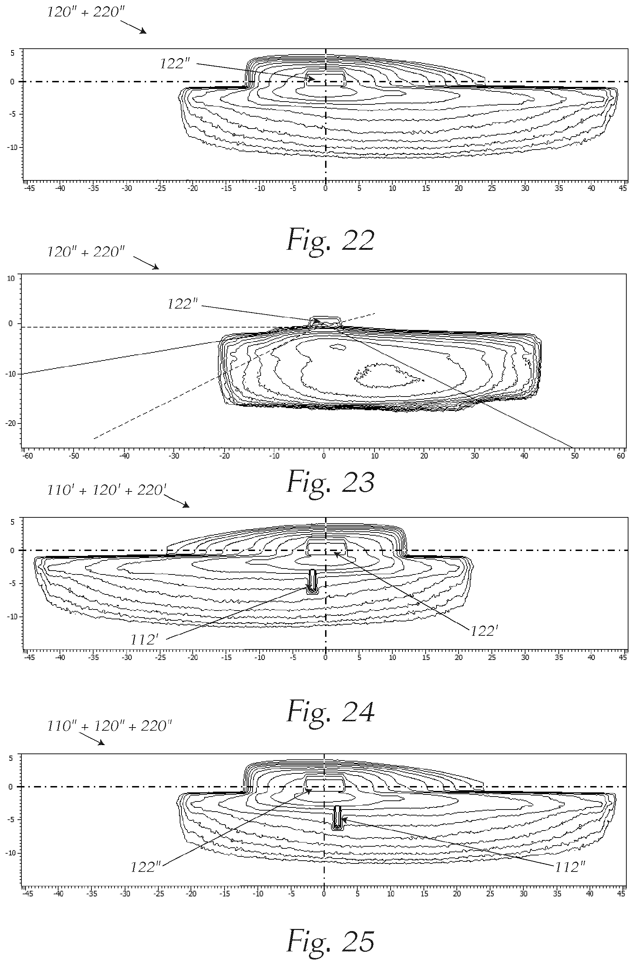

**Fig. 22** zeigt das Lichtbild 220" mit der Fernlicht-Lichtverteilung 221" des rechten Hauptscheinwerfers 2" gemeinsam mit dem Lichtbild 120" der Zusatzfernlicht-Lichtverteilung 121" und dem Intensitätsmaximum 122" des rechten Zusatzscheinwerfers 3".

**Fig. 23** stellt eine Lichtverteilung nach Fig. 22 als Lichtbild durch Projektion auf die Fahrbahn vor dem Fahrzeug 1 dar.

**Fig. 24** zeigt das Lichtbild 220' mit der Fernlicht-Lichtverteilung 221' des linken Hauptscheinwerfers 2' gemeinsam mit dem Lichtbild 120' der Zusatzfernlicht-Lichtverteilung 121' sowie dem Lichtbild 110' mit der Linien-Lichtverteilung 111' des linken Zusatzscheinwerfers 3'.

**Fig. 25** zeigt das Lichtbild 220" mit der Fernlicht-Lichtverteilung 221" des rechten Hauptscheinwerfers 2" gemeinsam mit dem Lichtbild 120" der Zusatzfernlicht-Lichtverteilung 121" sowie dem Lichtbild 110" mit der Linien-Lichtverteilung 111" des rechten Zusatzscheinwerfers 3".

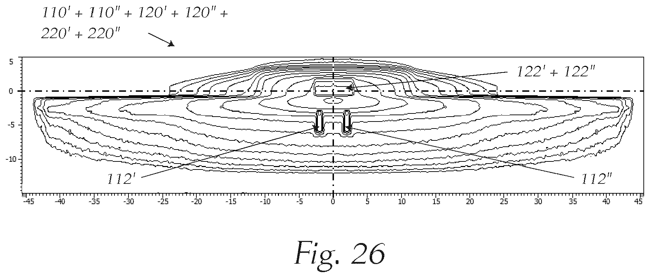

**Fig. 26** zeigt ein Gesamtlichtbild der Lichtbilder 110', 120', 110", 120" einer überlagerten Gesamtlichtverteilung des linken und rechten Zusatzscheinwerfers 3', 3" mit linienförmigen Intensitätsmaxima 112', 112" in der jeweiligen Lichtverteilung 111', 111" gemeinsam mit der jeweiligen Zusatzfernlicht-Lichtverteilung 121', 121" und dem jeweiligen Intensitätsmaximum 122', 122', sowie des linken und rechten Hauptscheinwerfers 2', 2" mit jeweils einem Lichtbild 220', 220", das eine Fernlicht-Lichtverteilung 221', 221" umfasst.

### Bezugszeichenliste:

- 1: Fahrzeug
- 2', 2": Hauptscheinwerfer
- 3, 3', 3": Zusatzscheinwerfer
- 4: Scheinwerfersystem
- 5: Lichtmodul
- 6: erstes Lichtmodul
- 7: zweites Lichtmodul
- 8: Abbildungsoptik
- 9a, 9b: Lichtquellen des ersten Lichtmoduls
- 10a, 10b, 10c: Lichtquellen des zweiten Lichtmoduls
- 11: Primäroptik des Zusatzscheinwerfers
- 11a: erste Primäroptik des ersten Lichtmoduls
- 11b: zweite Primäroptik des zweiten Lichtmoduls
- 12a, 12b: Lichtführungselemente des ersten Lichtmoduls
- 13a, 13b, 13c: Lichtführungselemente des zweiten Lichtmoduls
- 14: Lichteintrittsfläche eines Lichtführungselements
- 15: Lichtaustrittsfläche eines Lichtführungselements
- 16: Blende
- 16a: erste Blendenöffnung für erstes Lichtmoduls
- 16b: zweite Blendenöffnung für zweites Lichtmoduls
- 17: Halterung
- 18: Kühlvorrichtung
- 19: Steuereinrichtung
- 20: Montagepunkt
- 21: Leiterplatte
- F: Fläche
- D: Drehachse
- 110', 110": Lichtbild des ersten Lichtmoduls des Zusatzscheinwerfers
- 111', 111": Lichtverteilung des ersten Lichtmoduls des Zusatzscheinwerfers
- 112', 112": Intensitätsmaximum der Lichtverteilung des ersten Lichtmoduls des Zusatzscheinwerfers

- 120', 120": Lichtbild des zweiten Lichtmoduls des Zusatzscheinwerfers
- 121', 121": Lichtverteilung des zweiten Lichtmoduls des Zusatzscheinwerfers
- 122', 122": Intensitätsmaximum der Lichtverteilung des zweiten Lichtmoduls des Zusatzscheinwerfers

- 210', 210": Lichtbild des Hauptscheinwerfers für Abblendlicht
- 211', 211": Abblendlicht-Lichtverteilung des Hauptscheinwerfers
- 220', 220": Lichtbild des Hauptscheinwerfers für Hauptfernlicht
- 221', 221": Fernlicht-Lichtverteilung des Hauptscheinwerfers

## Patentansprüche

1. Zusatzscheinwerfer (3, 3', 3") für ein Fahrzeug, der dazu eingerichtet ist, ein Lichtbild vor dem Fahrzeug (1) durch Emittieren von Licht aus zumindest einem Lichtmodul (5) zu erzeugen und durch eine nachgelagerte Abbildungsoptik (8) vor das Fahrzeug zu projizieren, wobei
zumindest ein erstes Lichtmodul (6) dazu eingerichtet ist, ein erstes Lichtbild (110', 110") mit zumindest einer ersten Lichtverteilung (111', 111") mit zumindest einem ersten, im Wesentlichen vertikal orientierten, linienförmigen Intensitätsmaximum (112', 112") zu erzeugen, und
zumindest ein zweites Lichtmodul (7) dazu eingerichtet ist, ein zweites Lichtbild (120', 120") mit einer zweiten Lichtverteilung (121', 121") mit zumindest einem zweiten, im Wesentlichen rechteckförmigen Intensitätsmaximum (122', 122") zu erzeugen, und sich die Lichtbilder (110', 110", 120', 120") beider Lichtmodule (6, 7) überlagern, wobei das erste Intensitätsmaximum (112', 112") vertikal unter dem zweiten Intensitätsmaximum (122', 122") gelegen ist, **dadurch gekennzeichnet, dass**
das zumindest eine erste Lichtmodul (6) zur Erzeugung einer ersten Lichtemission durch zumindest eine erste Lichtquelle (9a, 9b),
das zumindest eine zweite Lichtmodul (7) zur Erzeugung einer zweiten Lichtemission durch zumindest eine zweite Lichtquelle (10a, 10b, 10c), wobei der Zusatzscheinwerfer (3, 3', 3") ferner umfasst:
zumindest eine Primäroptik (11), wobei die Primäroptik eine Mehrzahl von Lichtführungselementen (12a, 12b, 13a, 13b, 13c) aufweist und jedes Lichtführungselement (12a, 12b, 13a, 13b, 13c) eine Lichteintrittsfläche (14) zum Einkoppeln einer Lichtemission, sowie eine Lichtaustrittsfläche (15) aufweist,
wobei die erste Lichtemission in zumindest ein erstes Lichtführungselement (12a, 12b) der Primäroptik (11) einkoppelt, die zweite Lichtemission in zumindest ein zweites Lichtführungselement (13a, 13b, 13c) der Primäroptik (11) einkoppelt,
zumindest eine der Primäroptik (11) nachgelagerte Blende (16) mit zumindest einer ersten Blendenöffnung (16a), die der Lichtaustrittsfläche des ersten Lichtführungselements (12a, 12b) zugewandt ist und zumindest einer zweiten Blendenöffnung (16b), die der Lichtaustrittsfläche des zweiten Lichtführungselements (13a, 13b, 13c) zugewandt ist, wobei die Primäroptik (11) und die Blende (16) ein Gesamtleuchtbild aus den Lichtemissionen erzeugen und
eine der Blende (16) nachgelagerte Abbildungsoptik (8) das Gesamtleuchtbild als Lichtbild in Abstrahlrichtung des Zusatzscheinwerfers (3, 3', 3") als Gesamtlichtbild projiziert.

2. Zusatzscheinwerfer (3, 3', 3") nach Anspruch 1, **dadurch gekennzeichnet, dass** die langen Seiten des im Wesentlichen rechteckförmigen Intensitätsmaximum (122', 122") horizontal orientiert sind, wobei vorzugsweise die horizontale Lage des ersten Intensitätsmaximums (112', 112") innerhalb der horizontalen Breite des zweiten Intensitätsmaximums (122', 122") liegt.

3. Zusatzscheinwerfer (3, 3', 3") nach Anspruch 1 oder 2, **dadurch gekennzeichnet, dass** das erste Intensitätsmaximum (112', 112") und das zweite Intensitätsmaximum (122', 122') durch einen vertikalen Abstand voneinander getrennt sind.

4. Zusatzscheinwerfer (3, 3', 3") nach einem der Ansprüche 1 bis 3, **dadurch gekennzeichnet, dass** die Lichtaustrittsflächen (15) aller Lichtführungselemente (12a, 12b, 13a, 13b, 13c) in einer Fläche (F) liegen, wobei vorzugsweise die Fläche (F) eine Ebene ist.

5. Zusatzscheinwerfer (3, 3', 3") nach einem der Ansprüche 1 bis 4, **dadurch gekennzeichnet, dass** die Lichtaustrittsflächen (15) aller Lichtführungselemente (12a, 12b, 13a, 13b, 13c), die demselben Lichtmodul (6, 7) zugeordnet sind, eine gemeinsame Lichtaustrittsfläche bilden, wobei vorzugsweise die Lichtführungselemente (12a, 12b, 13a, 13b, 13c) des ersten Lichtmoduls (6) von jenen des zweiten Lichtmoduls (7) baulich getrennt sind, wobei vorzugsweise für alle Lichtführungselemente (12a, 12b, 13a, 13b, 13c) eine gemeinsame Halterung (17) vorgesehen ist.

6. Zusatzscheinwerfer (3, 3', 3") nach einem der Ansprüche 1 bis 5, **dadurch gekennzeichnet, dass** das erste Lichtmodul (6) eine Mehrzahl von Lichtquellen (9a, 9b) umfasst, die im Wesentlichen vertikal in einer Reihe übereinander angeordnet sind.

7. Zusatzscheinwerfer (3, 3', 3") nach einem der Ansprüche 1 bis 6, **dadurch gekennzeichnet, dass** das zweite Lichtmodul (7) eine Mehrzahl von Lichtquellen (10a, 10b, 10c) umfasst, die im Wesentlichen horizontal in einer Reihe nebeneinander angeordnet sind, wobei vorzugsweise die Lichtquellen (9a, 9b, 10a, 10b, 10c) LEDs sind.

8. Zusatzscheinwerfer (3, 3', 3") nach einem der Ansprüche 1 bis 7, **dadurch gekennzeichnet, dass** das erste Lichtmodul (6) vertikal über dem zweiten Lichtmodul (7) angeordnet ist.

9. Zusatzscheinwerfer (3, 3', 3") nach einem der Ansprüche 1 bis 8, **dadurch gekennzeichnet, dass** das die Blendenöffnungen (16a, 16b) der Blende (16) im Wesentlichen linienförmig und / oder rechteckförmig sind.

10. Zusatzscheinwerfer (3, 3', 3") nach einem der Ansprüche 1 bis 9, **dadurch gekennzeichnet, dass** das erste Lichtmodul (6) und das zweite Lichtmodul (7) auf einer gemeinsamen Kühlvorrichtung (18) angeordnet sind.

11. Zusatzscheinwerfer (3, 3', 3") nach einem der Ansprüche 1 bis 10, **dadurch gekennzeichnet, dass** das erste Lichtmodul (6) und das zweite Lichtmodul (7) von einer gemeinsamen Steuereinrichtung (19) angesteuert sind.

12. Zusatzscheinwerfer (3, 3', 3") nach einem der Ansprüche 1 bis 11, **dadurch gekennzeichnet, dass** der Zusatzscheinwerfer (3, 3', 3") um zumindest eine Achse (D) schwenkbar ist.

13. Scheinwerfersystem (4), **dadurch gekennzeichnet, dass** das Scheinwerfersystem (4) zumindest einen Hauptscheinwerfer (2', 2") und zumindest einen Zusatzscheinwerfer (3, 3', 3") nach einem der Ansprüche 1 bis 12 umfasst und das Lichtbild (110', 110", 120', 120") des Zusatzscheinwerfers (3, 3', 3") zumindest von einem weiteren Lichtbild (210', 210", 220', 220") des Hauptscheinwerfers (2', 2") überlagert ist, wobei vorzugsweise ein Fahrzeug (1) einen linken und einen rechten Zusatzscheinwerfer (3', 3") und einen linken und einen rechten Hauptscheinwerfer (2', 2") umfasst.

14. Scheinwerfersystem (4) nach Anspruch 13, **dadurch gekennzeichnet, dass** der linke und rechte Zusatzscheinwerfer (3', 3") jeweils unterschiedliche Lichtbilder (110', 110", 120', 120") projiziert.

15. Scheinwerfersystem (4) nach Anspruch 13 oder 14, **dadurch gekennzeichnet, dass** das Lichtbild (210', 210", 220', 220") des Hauptscheinwerfers (2', 2") eine Lichtverteilung eines Fernlicht (221', 221") oder eines Abblendlichts (211', 211") ist.

## Claims

1. Auxiliary headlamp (3, 3', 3") for a vehicle, which is set up to generate a light image in front of the vehicle (1) by emitting light from at least one light module (5) and to project it in front of the vehicle through downstream imaging optics (8), wherein
at least one first light module (6) is set up to generate a first light image (110', 110") with at least one first light distribution (111', 111") with at least one first, essentially vertically oriented, line-shaped intensity maximum (112', 112"), and
at least a second light module (7) is set up to generate a second light image (120', 120") with a second light distribution (121', 121") with at least one second, essentially rectangular intensity maximum (122', 122"), and the light images (110', 110", 120', 120") of both light modules (6, 7) are superimposed, the first intensity maximum (112', 112") being located vertically below the second intensity maximum (122', 122"), **characterized in that**
the at least one firstlight module (6) for generating a first light emission by at least one first light source (9a, 9b),
the at least one secondlight module (7) for generating a second light emission by at least one second light source (10a, 10b, 10c), the auxiliary headlamp (3, 3', 3") further comprising
at least one primary optic (11), the primary optic having a plurality of light guiding elements (12a, 12b, 13a, 13b, 13c), each light guiding element (12a, 12b, 13a, 13b, 13c) having a light input surface (14) for coupling a light emission, and a light emission surface (15)
wherein the first light emission couples into at least one first light guide element (12a, 12b) of the primary optics (11), the second light emission couples into at least one second light guide element (13a, 13b, 13c) of the primary optics (11),
at least one diaphragm (16) downstream of the primary optics (11), having at least one first diaphragm opening (16a), which faces the light exit surface of the first light guide element (12a, 12b), and at least one second diaphragm opening (16b), which faces the light exit surface of the second light guide element (13a, 13b, 13c), 13b, 13c), wherein the primary optics (11) and the diaphragm (16) generate an overall illumination image from the light emissions and
an imaging optics (8) downstream of the diaphragm (16) projects the overall illumination image as a light image in the radiation direction of the auxiliary headlamp (3, 3', 3").

2. Auxiliary headlamp (3, 3', 3") according to claim 1, **characterised in that the** long sides of the substantially rectangular intensity maximum (122', 122") are oriented horizontally, preferably with d he horizontal position of the first intensity maximum (112', 112") lies within the horizontal width of the second intensity maximum (122', 122").

3. Auxiliary headlamp (3, 3', 3") according to claim 1 or 2, **characterised in that** the first intensity maximum (112', 112") and the second intensity maximum (122', 122') are separated by a vertical distance.

4. Auxiliary headlamp (3, 3', 3") according to one of the claims 1 to 3, **characterised in that** the light exit surfaces (15) of all light guide elements (12a, 12b, 13a, 13b, 13c) lie in a surface (F), the surface (F) preferably being a plane.

5. Auxiliary headlamp (3, 3', 3") according to one of the claims 1 to 4, **characterised in that** the light exit surfaces (15) of all light guide elements (12a, 12b, 13a, 13b, 13c) belonging to the same light module (6, 7) form a common light-emitting surface, the light-guiding elements (12a, 12b, 13a, 13b, 13c) of the first light module (6) preferably being structurally separated from those of the second light module (7), a common holder (17) preferably being provided for all the light-guiding elements (12a, 12b, 13a, 13b, 13c).

6. Auxiliary headlamp (3, 3', 3") according to any one of claims 1 to 5, **characterised in that** the first light module (6) comprises a plurality of light sources (9a, 9b) arranged substantially vertically in a row one above the other.

7. Auxiliary headlamp (3, 3', 3") according to any one of claims 1 to 6, **characterized in that** the second light module (7) comprises a plurality of light sources (10a, 10b, 10c) arranged substantially horizontally side by side in a row, preferably the light sources (9a, 9b, 10a, 10b, 10c) being LEDs.

8. Auxiliary headlamp (3, 3', 3") according to any one of claims 1 to 7, **characterised in that** the first light module (6) is arranged vertically above the second light module (7) is arranged.

9. Auxiliary headlamp (3, 3', 3") according to any one of claims 1 to 8, **characterised in that** the apertures (16a, 16b) of the aperture (16) are substantially linear and/or rectangular.

10. Auxiliary headlamp (3, 3', 3") according to any one of claims 1 to 9, **characterised in that** the first light module (6) and the second light module (7) are arranged on a common cooling device (18).

11. Auxiliary headlamp (3, 3', 3") according to any one of claims 1 to 10, **characterised in that** the first light module (6) and the second light module (7) are controlled by a common control device (19).

12. Auxiliary headlamp (3, 3', 3") according to one of claims 1 to 11, **characterised in that** the auxiliary headlamp (3, 3', 3") is pivotable about at least one axis (D).

13. Headlamp system (4) Headlamp system (4), **characterized in that** the headlamp system (4) comprises at least one main headlamp (2', 2") and at least one auxiliary headlamp (3, 3', 3") according to one of Claims 1 to 12, and the light image (110', 110", 120', 120") of the auxiliary headlamp (3, 3', 3") is superimposed on at least one further light image (210', 210", 220', 220") of the main headlamp (2', 2"), wherein preferably a vehicle (1) comprises a left-hand and a right-hand auxiliary headlamp (3', 3") and a left-hand and a right-hand main headlamp (2', 2").

14. Headlamp system (4) according to claim 13, **characterised in that** the left and right auxiliary headlamps (3', 3") each project different light images (110', 110", 120', 120").

15. Headlamp system (4) according to claim 13 or 14, **characterised in that** the light pattern (210', 210", 220', 220") of the main headlamp (2', 2") is a light distribution of a high beam (221', 221") or a low beam (211', 211").

## Revendications

1. Projecteur auxiliaire (3, 3', 3") pour un véhicule, qui est agencé pour générer une image lumineuse à l'avant du véhicule (1) en émettant de la lumière à partir d'au moins un module d'éclairage (5) et pour la projeter à l'avant du véhicule à travers une optique d'imagerie (8) en aval, dans lequel
au moins un premier module d'éclairage (6) est configuré pour générer une première image lumineuse (110', 110") avec au moins une première distribution lumineuse (111', 111") avec au moins une première intensité maximale en forme de ligne, orientée essentiellement verticalement (112', 112"), et
au moins un deuxième module d'éclairage (7) est configuré pour générer une deuxième image lumineuse (120', 120") avec une deuxième distribution de lumière (121', 121") d'au moins une seconde, d'intensité maximale essentiellement rectangulaire (122', 122"), et les images lumineuses (110', 110", 120', 120") des deux modules lumineux (6, 7) sont superposés, le premier maximum d'intensité (112', 112") étant situé verticalement en dessous du deuxième maximum d'intensité (122', 122"), **caractérisé en ce que**
le au moins un premiermodule d'éclairage (6) pour générer une première émission de lumière par au moins une première source lumineuse (9a, 9b),
le au moins un deuxièmemodule lumineux (7) pour générer une deuxième émission de lumière par au moins une deuxième source lumineuse (10a, 10b, 10c), le projecteur auxiliaire (3, 3', 3") comprenant en outre
au moins une optique primaire (11), l'optique primaire ayant une pluralité d'éléments de guidage de la lumière (12a, 12b, 13a, 13b, 13c), chaque élément de guidage de la lumière (12a, 12b, 13a, 13b, 13c) ayant une surface d'entrée de la lumière (14) pour coupler une émission de lumière, et une surface d'émission de lumière (15)
dans laquelle la première émission de lumière se couple dans au moins un premier élément de guidage de lumière (12a, 12b) de l'optique primaire (11), la deuxième émission de lumière se couple dans au moins un deuxième élément de guidage de lumière (13a, 13b, 13c) de l'optique primaire (11)
au moins un diaphragme (16) disposé en aval de l'optique primaire (11) et comportant au moins une première ouverture de diaphragme (16a), qui est tournée vers la surface de sortie de la lumière du premier élément de guidage de la lumière (12a, 12b), et au moins une deuxième ouverture de diaphragme (16b), qui est tournée vers la surface de sortie de la lumière du deuxième élément de guidage de la lumière (13a, 13b, 13c), 13b, 13c), l'optique primaire (11) et le diaphragme (16) générant une image d'éclairage global à partir des émissions lumineuses et
une optique d'imagerie (8) en aval du diaphragme (16) projetant l'image d'éclairage global sous forme d'image lumineuse dans la direction de rayonnement du projecteur auxiliaire (3, 3', 3").

2. Projecteur auxiliaire (3, 3', 3") selon la revendication 1, **caractérisé en ce que** les longs côtés du maximum d'intensité sensiblement rectangulaire (122', 122") sont orientés horizontalement, de préférence d La position horizontale du premier maximum d'intensité (112', 112") se situe dans la largeur horizontale du deuxième maximum d'intensité (122', 122").

3. Projecteur auxiliaire (3, 3', 3") selon la revendication 1 ou 2, **caractérisé en ce que** la première intensité maximale (112', 112") et la deuxième intensité maximale (122', 122') sont séparées par une distance verticale.

4. Projecteur auxiliaire (3, 3', 3") selon l'une quelconque des revendications 1 à 3, **caractérisé en ce que** les surfaces d'émission de lumière (15) de tous les éléments de guidage de la lumière (12a, 12b, 13a, 13b, 13c) se trouvent dans une surface (F), de préférence la surface (F) étant un plan.

5. Projecteur auxiliaire (3, 3', 3") selon l'une quelconque des revendications 1 à 4, **caractérisé en ce que** les surfaces d'émission de lumière (15) de tous les éléments de guidage de la lumière (12a, 12b, 13a, 13b, 13c) appartenant au même module d'éclairage (6, 7) forment une surface commune d'émission de lumière, les éléments de guidage de la lumière (12a, 12b, 13a, 13b, 13c) du premier module d'éclairage (6) étant de préférence structurellement séparés de ceux du deuxième module d'éclairage (7), un support commun (17) étant de préférence prévu pour tous les éléments de guidage de la lumière (12a, 12b, 13a, 13b, 13c).

6. Projecteur auxiliaire (3, 3', 3") selon l'une quelconque des revendications 1 à 5, **caractérisé en ce que** le premier module d'éclairage (6) comprend une pluralité de sources lumineuses (9a, 9b) disposées sensiblement verticalement en une rangée les unes au-dessus des autres.

7. Projecteur auxiliaire (3, 3', 3") selon l'une quelconque des revendications 1 à 6, **caractérisé en ce que** le deuxième module d'éclairage (7) comprend une pluralité de sources lumineuses (10a, 10b, 10c) disposées sensiblement horizontalement côte à côte en une rangée, les sources lumineuses (9a, 9b, 10a, 10b, 10c) étant de préférence des LED.

8. Projecteur auxiliaire (3, 3', 3") selon l'une quelconque des revendications 1 à 7, **caractérisé en ce que** le premier module d'éclairage (6) est disposé verticalement au-dessus du deuxième module d'éclairage (7) est organisé.

9. Projecteur auxiliaire (3, 3', 3") selon l'une quelconque des revendications 1 à 8, **caractérisé en ce que** les ouvertures (16a, 16b) de l'ouverture (16) sont sensiblement linéaires et/ou rectangulaires.

10. Projecteur auxiliaire (3, 3', 3") selon l'une quelconque des revendications 1 à 9, **caractérisé en ce que** le premier module d'éclairage (6) et le deuxième module d'éclairage (7) sont disposés sur un dispositif de refroidissement commun (18).

11. Projecteur auxiliaire (3, 3', 3") selon l'une quelconque des revendications 1 à 10, **caractérisé en ce que** le premier module d'éclairage (6) et le deuxième module d'éclairage (7) sont contrôlés par un dispositif de contrôle commun (19).

12. Projecteur auxiliaire (3, 3', 3") selon l'une quelconque des revendications 1 à 11, **caractérisé en ce que** le projecteur auxiliaire (3, 3', 3") peut pivoter autour d'au moins un axe (D).

13. Système de phares (4) Système de projecteurs (4), **caractérisé en ce que** le système de projecteurs (4) comprend au moins un projecteur principal (2', 2") et au moins un projecteur auxiliaire (3, 3', 3") selon l'une des revendications 1 à 12, et l'image lumineuse (110', 110", 120', 120") du projecteur auxiliaire (3, 3'), 3") est superposée à au moins une autre image lumineuse (210', 210", 220', 220") du phare principal (2', 2"), dans laquelle de préférence un véhicule (1) comprend un phare auxiliaire gauche et droit (3', 3") et un phare principal gauche et droit (2', 2").

14. Système de phares (4) selon la revendication 13, **caractérisé en ce que** les phares auxiliaires gauche et droit (3', 3") projettent respectivement des images lumineuses différentes (110', 110", 120', 120").

15. Système de phare (4) selon la revendication 13 ou 14, **caractérisé en ce que** le motif lumineux (210', 210", 220', 220") projecteur principal (2', 2") est une répartition lumineuse d'un feu de route (221', 221") ou d'un feu de croisement (211', 211").
